# DEMANDE DE BREVET EUROPEEN

(11) **EP 1 527 945 A1**
(43) Date de publication de la demande: **04.05.2005**
(21) Numéro de dépôt: 04292500.8
(22) Date de dépôt: 21.10.2004
(51) Int. Cl.: B60N 2/48

(54) **Appui-tete rabattable**

(30) Priorité: 28.10.2003 FR 0312622
(71) Demandeur: Centre d'Etude et de Recherche pour l'Automobile ( CERA), 51100 Reims (FR)
(72) Inventeur: Oliva, Miguel Angel, 17001 Girona (ES)
(74) Mandataire: Geismar, Thierry

(57) **Abrégé**

L'invention concerne un appui-tête (1), du type comprenant une broche de montage (2) sur un dossier de siège, notamment de véhicule automobile, un corps central monté sur ladite broche et sur lequel un carter (6) portant le coussin d'appui est monté, ledit appui-tête comprenant un dispositif de mise en translation du carter (6) par rapport au corps central (3) suivant un axe Z, et un dispositif de mise en rotation du corps central (3) par rapport à la broche (2), lesdits dispositifs étant agencés pour coopérer de sorte, lorsque le carter (6) est dans une position extrême suivant l'axe Z, à activer le dispositif de mise en rotation pour positionner le carter (6) et le corps central (3) dans une position extrême suivant un axe X.

## Description

L'invention concerne un appui-tête, du type comprenant une broche de montage sur un dossier de siège, notamment de véhicule automobile.

En particulier, l'invention concerne les appuis-tête destinés à être disposés sur les sièges arrières des véhicules automobiles. Ces appuis-tête doivent remplir une fonction de sécurité vis-à-vis non seulement des passagers des sièges arrières, mais également du conducteur du véhicule, dans la mesure où ils doivent interférer le moins possible avec le champ visuel du conducteur vers l'arrière, et permettre ainsi une bonne rétrovision.

Pour améliorer la rétrovision, on connaît déjà des appuis-tête en forme de L inversé dont la géométrie est prévue pour s'adapter, lorsqu'ils sont dans leur position extrême vers le bas, à la forme des dossiers de siège.

On connaît également des appuis-tête rabattables vers l'avant ou vers l'arrière du siège, qui permettent, une fois rabattus, d'assurer au conducteur une rétrovision satisfaisante. Toutefois, pour les appuis-tête rabattables vers l'avant, le mouvement de rabattement est gêné par la partie supérieure du dossier de siège, ce qui limite leur faculté de pliage.

Concernant la sécurité des passagers arrières, les appuis-tête en forme de L et les appuis-tête rabattables vers l'avant sont prévus pour, lorsqu'ils sont respectivement baissés ou rabattus, causer une gêne au passager qui s'installe dans le siège, de sorte à obliger celui-ci à régler l'appui-tête à une hauteur minimale de sécurité.

Toutefois, la gêne causée par ces appuis-tête n'est pas suffisante pour assurer qu'ils seront réglés correctement par l'utilisateur. Quant aux appuis-tête rabattables vers l'arrière, ceux-ci ne causent aucune gêne au passager qui n'est donc pas obligé de le régler en position de sécurité avant de s'asseoir.

Pour résoudre l'ensemble de ces inconvénients, l'invention propose un appui-tête rabattable vers l'avant du véhicule, jusqu'à une position extrême telle que la gêne causée sur le dos du passager oblige celui-ci à régler l'appui-tête en position de sécurité.

Cette position extrême est obtenue par une structure particulière de l'appui-tête qui impose, pour le mouvement de rabattement, d'effectuer un mouvement de translation vers le haut, selon une direction Z, puis un mouvement de rotation vers l'avant. Ainsi, l'appui-tête peut être rabattu sans interférer avec la partie supérieure du dossier de siège, grâce au débattement induit par le mouvement de translation, et atteindre une position extrême vers l'avant qui empêche le passager de s'asseoir correctement.

En outre, dans une réalisation particulière, cet appui-tête peut être réglé par l'utilisateur dans une position de confort, vers l'avant du véhicule, selon une direction X, ce réglage étant à la fois compatible avec le mouvement de rabattement évoqué ci-dessus et indépendant de celui-ci.

En outre, les moyens utilisés pour le rabattement et pour le réglage selon la direction X sont intégrés à l'appui-tête, ce qui a pour avantage de faciliter son montage et son utilisation sur tous types de sièges de véhicules.

A cet effet, et selon un premier aspect, l'invention concerne un appui-tête, du type comprenant une broche de montage sur un dossier de siège, notamment de véhicule automobile, un corps central monté sur ladite broche et sur lequel un carter portant le coussin d'appui est monté, ledit appui-tête comprenant un dispositif de mise en translation du carter par rapport au corps central suivant un axe Z, et un dispositif de mise en rotation du corps central par rapport à la broche, lesdits dispositifs étant agencés pour coopérer de sorte, lorsque le carter est dans une position extrême suivant l'axe Z, à activer le dispositif de mise en rotation pour positionner le carter et le corps central dans une position extrême suivant un axe X.

Selon un mode de réalisation, l'appui-tête comprend un couvercle mobile en rotation par l'intermédiaire d'un dispositif de réglage de l'appui-tête suivant la direction X.

D'autres objets et avantages de l'invention apparaîtront au cours de la description qui suit, faite en référence aux dessins annexés dans lesquels :
- la figure 1 est une vue en perspective d'un appui-tête selon un premier mode de réalisation, montrant partiellement l'intérieur de l'appui-tête dans lequel sont intégrés les dispositifs de mise en translation et de mise en rotation ;
- la figure 2 est une vue analogue à la figure 1, montrant l'appui-tête selon un deuxième mode de réalisation, cet appui-tête comprenant en outre un dispositif de réglage suivant la direction X ; la figure montre également de façon agrandie les moyens de contrainte de la translation ;
- la figure 3 est une vue partiellement éclatée de l'appui-tête de la figure 2 ;
- les figures 4a, 4b et 4c sont des vues schématiques en coupe de l'appui-tête de la figure 2, montrant l'appui-tête respectivement en position initiale, en position de translation et en position de rabattement ;
- les figures 5a et 5b sont des vues schématiques en coupe de l'appui-tête de la figure 2, montrant l'appui-tête respectivement en position initiale et en position d'utilisation obtenue par réglage suivant la direction X.

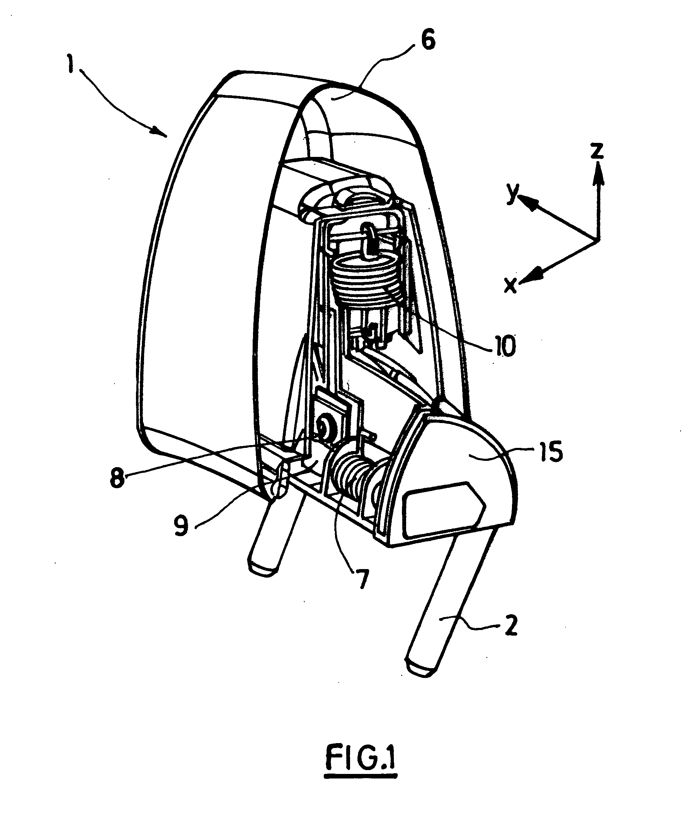

L'appui-tête 1 décrit en relation avec les figures 1 à 5 est destiné à être monté sur le dossier d'un siège de véhicule automobile. A cet effet, l'appui-tête comprend une broche de montage 2 présentant sensiblement une forme de U renversé, dont les extrémités sont destinées à être insérées dans la partie supérieure du dossier.

L'appui-tête 1 comprend également un corps central 3 monté sur la tige transversale 4 de la broche 2. A cet effet, le corps central 3 est pourvu de logements 5 destinés à recevoir la tige transversale 4.

Un carter 6 portant le coussin d'appui, non représenté, est monté sur le corps central 3. Ce carter 6 est formé d'un matériau rigide, par exemple du polypropylène, de sorte à former non seulement un support pour le coussin de l'appui-tête qui est disposé dessus, mais également une enveloppe protectrice pour le corps central 3 et les éléments qui y sont intégrés.

Pour pouvoir être rabattu vers l'avant du véhicule, et assurer ainsi sa fonction de sécurité, l'appui-tête 1 comprend un dispositif de mise en translation du carter 6 par rapport au corps central 3 suivant l'axe Z, et un dispositif de mise en rotation du corps central 3 par rapport à la broche 2, lesdits dispositifs étant agencés pour coopérer de sorte, lorsque le carter 6 est dans une position extrême suivant l'axe Z, à activer le dispositif de mise en rotation pour positionner le carter 6 et le corps central 3 dans une position extrême suivant l'axe X.

Le dispositif de mise en rotation représenté comprend un axe de rotation s'étendant suivant une direction Y, un ressort de torsion 7 associé audit axe de rotation, et une charnière de liaison 8 entre le corps central 3 et ledit axe.

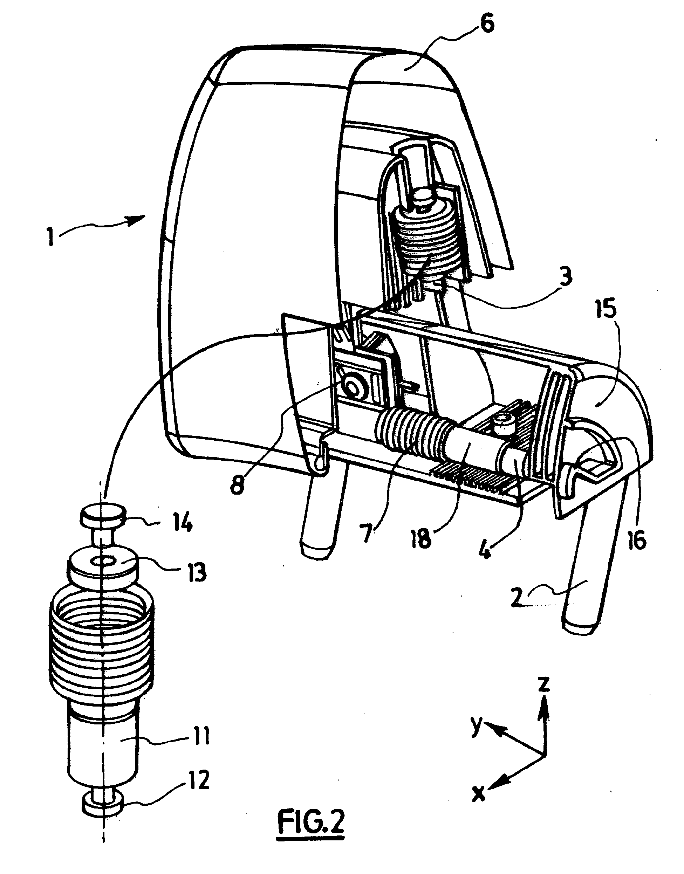

Selon le mode de réalisation représenté sur la figure 1, l'axe de rotation est formé d'une tige 9 parallèle à la tige transversale 4 de la broche 2, ce qui simplifie la fabrication de la broche 2 elle-même. Selon le deuxième mode de réalisation, représenté sur les figures 2 à 7, l'axe de rotation est formé de la tige transversale 4 de la broche 2.

Selon les réalisations représentées, le dispositif de mise en translation comprend des moyens de contrainte de la translation et des moyens de guidage du carter 6.

Les moyens de contrainte de la translation comprennent un ressort de compression 10 associé au corps central 3, et s'étendant verticalement, ce ressort 10 étant comprimé entre le corps central 3 et le carter 6.

Selon le mode de réalisation représenté sur les figures 2 à 7, le ressort de compression 10 est maintenu en charge par un électroaimant 11 associé au corps central 3 par l'intermédiaire d'une vis 12, cet électroaimant 11 étant en contact avec une rondelle métallique 13 associée au carter 6 par l'intermédiaire d'une autre vis 14.

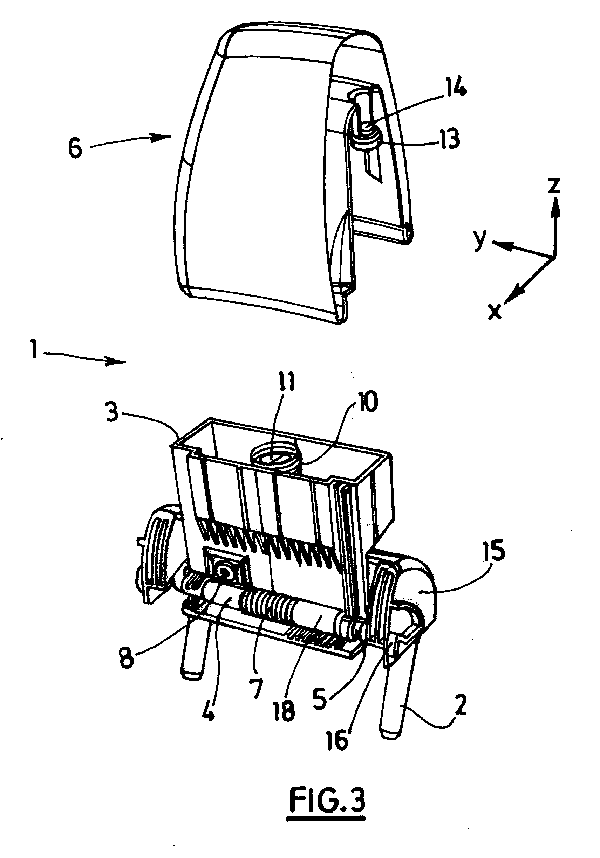

Les moyens de guidage du carter 6 sont formés d'un couvercle 15 monté sur la broche 2. Le couvercle 15 comprend des gorges latérales de guidage 16 (voir figures 2 et 3) faisant saillie de part et d'autre. Des ergots 17 dont la forme est complémentaire de celle des gorges 16 sont prévus sur le carter 6, lesdits ergots étant engagés dans les gorges de guidage 16.

Les gorges 16 sont débouchantes, de sorte à libérer la rotation du carter 6 lorsque les ergots 17, au cours de la translation, parviennent à l'extrémité des gorges 16. En outre, cette rotation est facilitée par le fait que les gorges 16 soient incurvées selon la direction X.

Dans le mode de réalisation représenté sur les figures 2 à 5, l'appui-tête 1 comprend en outre un dispositif de réglage suivant la direction X par l'intermédiaire duquel le couvercle 15 est mobile en rotation. Ce dispositif de réglage comprend ici une charnière à friction 18 montée sur la tige transversale 4 de la broche 2, qui forme axe de rotation.

On décrit à présent le mode de fonctionnement d'un tel appui-tête, selon les deux modes de réalisation correspondant respectivement à la figure 1, et aux figures 2 à 5.

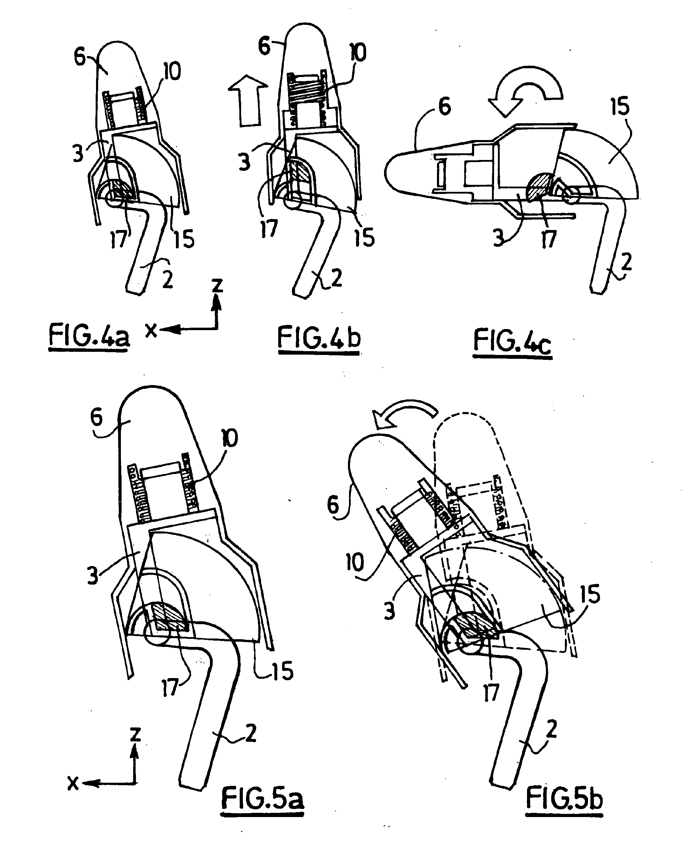

Lorsque l'appui-tête 1 se trouve dans une position initiale (figure 4a), le ressort de compression 10 est comprimé entre le corps central 3 et le carter 6.

Selon le premier mode de réalisation, la libération de la contrainte exercée par le ressort 10 est réalisée manuellement. Pour provoquer la translation de l'appui-tête 1, l'utilisateur doit tirer le carter 6 vers le haut en exerçant une force supérieure à celle du ressort de compression 10. Selon le deuxième mode de réalisation, la libération de la contrainte exercée par le ressort 10 est réalisée par désactivation de l'électroaimant 11 par l'intermédiaire d'un signal électrique, ce qui présente l'avantage de pouvoir être mis en oeuvre à distance, par exemple par le conducteur du véhicule.

Le carter 6 se déplace donc en translation le long du corps central 3 et du couvercle 15, dans le sens de la flèche représentée sur la figure 4b. Lorsque la position extrême suivant l'axe Z est atteinte, le corps central 3 est actionné en rotation dans la direction X sous l'effet du ressort de torsion 7, entraînant également en rotation le carter 6. Simultanément, la charnière de liaison 8 entre le corps central 3 et l'axe Y s'articule en rotation, permettant au carter 6 et au corps central 3 d'atteindre une position extrême suivant l'axe X, c'est-à-dire d'être rabattu de façon optimale, tel que représenté sur la figure 4c.

En outre, lorsque l'appui-tête 1 est en position rabattue, la géométrie des gorges latérales 16 permet d'éviter un verrouillage accidentel de l'électroaimant 11.

Pour ramener l'appui-tête 1 dans sa position initiale, il suffit que l'utilisateur pousse le carter 6 vers le haut, la géométrie des gorges de guidage 16 permettant au carter 6 d'effectuer une rotation vers l'arrière et une translation vers le bas de façon continue.

Ainsi, selon l'invention, il est possible de commander le rabattement de l'appui-tête 1 à partir de l'appui-tête lui-même, à partir de la place du conducteur ou de celle du passager avant, ou encore à partir des sièges arrières, en particulier lorsque ceux-ci sont repliables, de sorte à éviter le démontage des appuis-tête lors du repliement.

L'appui-tête 1 dans son second mode de réalisation est agencé pour permettre en outre un réglage suivant la direction X, de sorte à procurer un confort optimal à son utilisateur.

Ce réglage est illustré par la figure 5. A partir de la position initiale de l'appui-tête (figure 5a), l'utilisateur peut faire passer l'appui-tête en position de réglage (figure 5b), en le déplaçant manuellement vers l'avant du véhicule. Cette action entraîne en effet la rotation simultanée de l'ensemble couvercle 15 - corps central 3 - carter 6 autour de l'axe de rotation formé par la tige transversale 4, par l'intermédiaire de la charnière à friction 18 montée sur la tige transversale 4 de la broche 2 et sur le couvercle 15.

## Revendications

1. Appui-tête (1), du type comprenant une broche de montage (2) sur un dossier de siège, notamment de véhicule automobile, un corps central (3) monté sur ladite broche et sur lequel un carter (6) portant le coussin d'appui est monté, **caractérisé en ce qu'**il comprend un dispositif de mise en translation du carter (6) par rapport au corps central (3) suivant un axe Z, et un dispositif de mise en rotation du corps central (3) par rapport à la broche (2), lesdits dispositifs étant agencés pour coopérer de sorte, lorsque le carter (6) est dans une position extrême suivant l'axe Z, à activer le dispositif de mise en rotation pour positionner le carter (6) et le corps central (3) dans une position extrême suivant un axe X.

2. Appui-tête selon la revendication 1, **caractérisé en ce que** le dispositif de mise en rotation comprend un axe de rotation (4, 9) s'étendant suivant une direction Y, un ressort de torsion (7) associé à l'axe de rotation et au corps central (3), et une charnière (8) de liaison entre le corps central (3) et l'axe de rotation.

3. Appui-tête selon la revendication 1 ou 2, **caractérisé en ce que** le dispositif de mise en translation comprend des moyens de contrainte de la translation et des moyens de guidage du carter (6), lesdits moyens de guidage étant formés d'un couvercle (15) monté sur la broche (2), ledit couvercle comprenant des gorges latérales de guidage (16), et d'ergots complémentaires (17) prévus sur le carter (6), lesdits ergots étant engagés dans les gorges de guidage (16).

4. Appui-tête selon la revendication 3, **caractérisé en ce que** les gorges (16) sont débouchantes de sorte à libérer la rotation du carter (6) lorsque les ergots (17) parviennent à l'extrémité desdites gorges.

5. Appui-tête selon la revendication 4, **caractérisé en ce que** les gorges (16) sont incurvées selon la direction X.

6. Appui-tête selon l'une quelconque des revendications 3 à 5, **caractérisé en ce que** les moyens de contrainte de la translation comprennent un ressort de compression (10) associé au corps central (3), ledit ressort étant comprimé entre le corps central (3) et le carter (6).

7. Appui-tête selon la revendication 6, **caractérisé en ce que** ledit ressort de compression (10) est maintenu en charge par un électroaimant (11 ) associé au corps central (3), la libération de la contrainte étant réalisée par désactivation dudit électroaimant.

8. Appui-tête selon la revendication 6, **caractérisé en ce que** la libération de la contrainte est réalisée manuellement.

9. Appui-tête selon l'une des revendications 3 à 8, **caractérisé en ce que** le couvercle (15) est mobile en rotation par l'intermédiaire d'un dispositif de réglage de l'appui-tête suivant la direction X.

10. Appui-tête selon la revendication 9, **caractérisé en ce que** le dispositif de réglage suivant la direction X comprend une charnière à friction (18) montée sur la broche (2).
